# EUROPÄISCHE PATENTSCHRIFT

(11) **EP 2 689 984 B1**
(45) Veröffentlichungstag und Bekanntmachung des Hinweises auf die Patenterteilung: **06.04.2016**
(21) Anmeldenummer: 13003707.0
(22) Anmeldetag: 24.07.2013
(51) Int. Cl.: B61D 3/20, B62D 53/00, B62D 63/06

(54) **Transportzug mit einem Schleppfahrzeug und einem oder mehreren Anhängern**
Transport train with a tow vehicle and one or more trailers
Train de transport comprenant un véhicule de remorquage et une ou plusieurs remorques

(30) Priorität: 24.07.2012 DE 102012014607
(43) Veröffentlichungstag der Anmeldung: 29.01.2014
(73) Patentinhaber: Jungheinrich Aktiengesellschaft, 22047 Hamburg (DE)
(72) Erfinder: Magens, Ernst-Peter, 22949 Ammersbek (DE)
(74) Vertreter: Hauck Patentanwaltspartnerschaft mbB

(56) Entgegenhaltungen:
- EP-A1- 1 352 815
- WO-A1-2006/111620
- DE-A1-102010 043 207
- DE-B3-102008 060 801

## Beschreibung

Die vorliegende Erfindung einen Transportzug mit einem Schleppfahrzeug und einem oder mehreren Anhängern.

In vielen Bereichen der Intralogistik und hier insbesondere im Materialfluss zur Versorgung der Produktion kommen Transportzüge zum Einsatz. Die Transportzüge werden gelegentlich auch als Routenzug oder als Schleppzug bezeichnet und bestehen aus dem Schleppfahrzeugs und einem oder mehreren Anhängern, die dann mit sogenannten Innenwagen beladen werden. Die Innenwagens werden gelegentlich auch als Rollpaletten bezeichnet und nehmen die eigentliche, zu transportierende Last auf. Die Innenwagen werden als komplette Einheit vom Lager in die Produktion mit Hilfe des Transportzuges verbracht. Dort verbleiben sie und werden im Laufe des Produktionsprozesses geleert und dann durch den Transportzug wieder abgeholt. Gegenüber den in der Vergangenheit vornehmlich eingesetzten Gabelstaplern für den Materialfluss ist der Platzbedarf und insbesondere der Gangbreitenbedarf für die Schleppzüge deutlich geringer.

Zur Ausführung dec Transportzüge sind unterschiedliche Ausgestaltungen bekannt. Es ist zu unterscheiden zwischen Transportzügen, bei denen die Rollpaletten auch während des Transports von ihren eigenen Schwcnkrollcn getragen und somit nur geschleppt werden und solchen Transportzügen, bei denen die Innenwagen im Anhänger vom Boden frei gehoben werden. Weiterhin ist die Spurtreue der Schleppzüge, insbesondere bei Kurvenfahrten, ein wichtiger Gesichtspunkt. Einfache Schlepper-Anhängersysteme haben den Nachteil, dass sie einen großen Hüllflächenbedarf haben, da die kurvenäußere, vordere Ecke des Schleppers den äußeren Hüllradius vorgibt und das hintere Ende des Schleppers und die nachfolgenden Anhänger immer weiter nach innen ziehen und die kurveninnere, hintere Ecke des letzten Anhängers den inneren Hüllkreis vorgibt. Auch die Breite des Schleppzuges ist ein wichtiges Kriterium für die Auslegung der Gangbreite bei seiner Geradeausfahrt.

Mit DE 603 00 189 T2 ist eine Lösung bekannt geworden, die einen klassischen Schlepper mit Vorderradlenkungsanhänger mit einem E-förmigen Rahmen aufweist. Während des Transports verbleiben die Rollpaletten auf ihren eigenen Schwenkrollen und werden über entsprechende Einrichtungen an den Anhängern gezogen und geführt. Die Anhänger sind durch eine entsprechende Auslegung der Geometric von Kupplungspunkten und zentraler Achse spurtreu. Nachteilig an dem bekannten System ist, dass der Schlepper selbst nach innen zieht und die Anhänger breiter als die Last ausgebildet sind. Weiterhin sind die Schwenkrollen der Rollpaletten permanent in Bodenkontakt, was insbesondere bei Transportfahrten zu einem hohen Verschleiß und zu einer nicht unerheblichen Geräuschbelastung für die Umgebung führt. Da die bekannten Anhänger sehr leicht ausgeführt sind, besteht zudem die Gefahr, dass bei längeren Schleppzügen mit entsprechend größeren Zugkräften die Führungskräfte an den Rädern der Anhänger nicht ausreichen, um die Spurtreue der Anhänger zu gewährleisten.

Der Nachteil der nicht ausreichenden Führungskraft der Räder der Anhänger wird in DE 10 2008 060 962 A1 vermieden, indem die Rollpaletten zum Transport angehoben werden. Hierdurch ruht das Gewicht der Rollpaletten direkt auf den Rädern des Anhängers und der Verschleiß sowie die Geräuschbelästigung durch mitlaufende Schwenkrollen werden vermieden. Allerdings weist die dargestellte Geometrie der Kuppelpunkte und der zentralen Anhängerachse auf eine reduzierte Spurtreue des Transportzuges hin.

Aus EP 1 743 828 B1 ist ein Schleppzug bekannt geworden, dessen Anhänger eine Allradlenkung besitzen. Der Schlepper besitzt eine Vorderradlenkung, die die Spurtreue reduziert.

Aus DE 10 2007 032 056 B4 ist ein Anhänger für Flurförderzeuge bekannt, der ein sich in Fahrzeuglängsrichtung über einen Laderaum erstreckendes Portaltragwerk aufweist, eine mittels eines Hubwerks heb- und senkbare Aufnahme für Rollbehälter sowie lenkbar ausgeführte Hinterachsen besitzt.

Aus DE 102008060801 ist ein weiteres Schleppzug bekannt.

Der Erfindung liegt die Aufgabe zugrunde, einen Transportzug bereitzustellen, der bei einer Kurvenfahrt einen möglichst geringen Hüllflächenbedarf besitzt.

Erfindungsgemäß wird die Aufgabe durch einen Transportzug mit den Merkmalen aus Anspruch 1 gelöst. Vorteilhafte Ausgestaltungen bilden die Gegenstände der Unteransprüche.

Der erfindungsgemäße Transportzug besitzt ein Schleppfahrzeug und einen oder mehrere Anhänger. Jeder der Anhänger weist einen Tragrahmen auf, der ausgebildet ist, um einen Innenwagen und/oder Last in einem angehobenen Zustand aufzunehmen. Der in dem Tragrahmen aufgenommene Innenwagen oder die aufgenommene Last haben im angehobenen Zustand keinen Bodenkontakt, sondern sind vollständig durch den Tragrahmen gehalten. Ferner besitzt jeder der Anhänger, bezogen auf seine Fahrtrichtung, an einer Seite eine Deichsel zur Verbindung mit einem schleppenden Fahrzeug, also dem Schleppfahrzeug oder einem vorausfahrenden Anhänger innerhalb des Transportzuges. An seiner in Fahrtrichtung gegenüberliegenden Seite besitzt der Anhänger eine Kupplungsgabelzwischenverbindung mit einem angehängten Anhänger. Das Schleppfahrzeug besitzt bezogen auf seine Fahrtrichtung an der hinteren Seite eine Kupplungsgabelzwischenverbindung mit der Deichsel eines geschleppten Anhängers und an seiner gegenüberliegenden Seite in Fahrtrichtung eine Vorderachse. Erfindungsgemäß ist der Abstand (LS) zwischen der Vorderachse und dem Kupplungsmaul des Schleppfahrzeugs halb so groß wie der Abstand LA zwischen einem freien Ende der Deichsel und dem Kupplungsmaul der Anhänger. Die Längenverhältnisse von Schleppfahrzeug zu Anhänger in einem ungefähren Verhältnis von 1 : 2 erlauben es, einen Transportzug bereitzustellen, der eine gute Spurtreue besitzt und zugleich einen geringen Hüllflächenbedarf bei der Kurvenfahrt aufweist.

In einer bevorzugten Ausgestaltung ist die Vorderachse des Schleppfahrzeugs starr ausgebildet und wird nicht gelenkt Die Vorderachse des Schleppfahrzeugs kann als durchgehende Vorderachse ausgebildet sein, umfasst aber im Fall, einer Einzelradaufhängung auch die geometrische Verbindungslinie der Radachsen. Indem das Schleppfahrzeug an seinen hinteren, zu den Anhängern des Transportzuges weisenden Ende gelenkt wird, wird der Hüllflächenbedarf bei Kurvenfahrten weiter minimiert, da bei der Kurvenfahrt die Lenkung nicht am vorderen Ende des Schleppfahrzeugs, sondern näher an seinem Kupplungsmaul für die geschleppten Anhänger erfolgt.

In einer möglichen Ausgestaltung ist das Schleppfahrzeug als dreiräderiges Fahrzeug mit einem gelenkten Hinterrad ausgebildet. Auch ist es möglich, das Schleppfahrzeug als ein vierräderiges Fahrzeug auszubilden, dessen Hinterräder lenkbar ausgebildet sind.

In einer bevorzugten Ausgestaltung ist der Abstand zwischen Vorderachse und Kupplungsmaul des Schleppfahrzeugs der Abstand, der zwischen der Mittellinie der Vorderachse des Schleppfahrzeugs und einem Kuppelpunkt des Kupplungsmauls auftritt. Der Kuppelpunkt der Kupplungsgabel ist dabei der Punkt, um den eine in das Kupplungsmaul eingehängte Deichsel bei einer Kurvenfahrt schwenkt.

In einer weiteren bevorzugten Ausgestaltung ist der Abstand (LA) zwischen dem freien Ende der Deichsel und dem Kupplungsmaul des Anhängers der Abstand, der zwischen einem Kuppelpunkt des freien Endes der Deichsel und einem Kuppelpunkt des Kupplungsmauls vorhanden ist. Der Abstand LA ist somit der zwischen den Kuppelpunkten des Anhängers auftretende Abstand.

Für den erfindungsgemäßen Transportzug gibt es unterschiedliche Ausgestaltungen der Anhänger, die einzeln oder auch kombiniert miteinander in dem Transportzug eingesetzt werden können. In einer bevorzugten Ausgestaltung ist mindestens einer der Anhänger als zweirädriger Anhänger ausgebildet, dessen Räder bezogen auf die Fahrtrichtung außermittig an dem Tragrahmen angeordnet ist. Bevorzugt sind die Räder näher zum Kupplungsmaul als zur Deichsel des Anhängers angeordnet, so dass der Anhänger Hinterräder aufweist.

Bevorzugt sind die hinten liegenden Räder als lenkbare Räder ausgebildet, die entsprechend einem zwischen der Deichsel und dem Kupplungsmaul des schleppenden Fahrzeugs auftretenden Verdrehwinkel ausgelenkt werden. Die Auslenkung der lenkbaren Räder erfolgt entsprechend dem zwischen der Deichsel des Anhängers und dem Kupplungsmaul auftretenden Verdrehwinkel, wobei die Richtung für die Auslenkung der Anhängerräder so gewählt ist, dass diese spurtreu dem schleppenden Fahrzeug folgen. Der Verdrehwinkel zwischen schleppendem und geschlepptem Fahrzeug wird fachsprachlich auch als Knickwinkel bezeichnet.

In einer bevorzugten Ausgestaltung sind die lenkbaren Anhängerräder über eine Koppelstange mit der Deichsel des Anhängers koppelbar, Die Koppelstange übertragt den zwischen Deichsel und Kupplungsmaul auftretenden Verdrehwinkel auf die lenkbaren Anhängerräder des Anhängers.

Insbesondere bei der Ausgestaltung des Anhängers mit zwei Rädern sind bevorzugt an dem zur Deichsel weisenden Ende des Anhängers zusätzlich ein oder mehrere Stützräder für den Anhänger vorgesehen. Die Stützräder erlauben es, den Anhänger auch in nicht gekoppeltem Zustand horizontal für die Aufnahme des Innenwagens auszurichten und diesen in eine gewünschte Position zu bringen. Bei gekoppelter Deichsel des Anhängers sind das oder die Stützräder vom Boden abgehoben so dass im Transportzug ausschließlich die Anhängerräder Bodenkontakt haben.

In einer alternativen Ausgestaltung besitzt mindestens einer der Anhänger drei oder vier Räder, von denen das oder die näher der Deichsel angeordneten Räder als Schwenkrollen und bevorzugt die beiden näher zum Kupplungsmaul angeordneten Räder als gelenkte Hinterräder ausgestaltet sind. Bei der drei- oder vierrädrigen Ausgestaltung des Anhängers bleiben im Transportzug alle Räder des Anhängers auf dem Boden, so dass eine aufgenommene Last über den Tragrahmen gleichmäßig verteilt ist. Bevorzugt ist bei dem drei- oder vierrädrigen Fahrwerk des Anhängers die Deichsel um eine quer zur Fahrtrichtung und parallel zum Boden verlaufende Schwenkachse verschwenkbar.

Auch hinsichtlich des Aufbaus des Tragrahmens für den Anhänger sind unterschiedliche Ausgestaltungen möglich. In einer bevorzugten Ausgestaltung ist mindestens einer der Anhänger mit einem portalartigen Tragrahmen ausgestattet, der einen Aufnahmeraum des Anhängers überspannt. Der portalartige Tragrahmen kann einen Innenwagen von beiden Längsseiten quer zur Fahrtrichtung aufnehmen, so dass beispielsweise das Be- und Entladen des Transportzuges problemlos von unterschiedlichen Seiten des Anhängers erfolgen kann. Der portalartige Tragrahmen besitzt bevorzugt einen portalförmigen Bügel, der einen hinteren und einen vorderen Anhängerabschnitt miteinander verbindet.

In einer alternativen, ebenfalls bevorzugten Ausgestaltung ist mindestens einer der Anhänger mit einem U-förmigen Tragrahmen ausgestattet, der einen Innenwagen von seiner offenen Längsseite quer zur Fahrtrichtung aufnehmen kann. Bei einem U-förmigen Tragrahmen erfolgt das Be- und Entladen des Anhängers mit dem Innenwagen stets von einer Seite. Der U-förmige Tragrahmen besitzt im Vergleich zu portalartigcn Tragrahmen den Vorteil, dass der vordere und der hintere Anhängerteil nicht durch ein die Höhe des Innenwagens begrenzendes Bügel miteinander verbunden sind, sondern Innenwagen mit beliebiger Höhe aufgenommen werden können.

In einer bevorzugten Ausgestaltung besitzt mindestens einer der Anhänger eine Breite quer zur Fahrtrichtung, die kleiner oder gleich der Breite des aufzunehmenden Innenwagens ist. Hierdurch wird die Breite bei der Geradcausfahrt des Transportzuges durch die Breite des Schleppfahrzeugs bzw. der verwendeten Innenwagen vorgegeben.

In einer weiteren bevorzugten Ausgestaltung besitzt mindestens einer der Anhänger mittig ein Paar von ungelenkten Rädern. Die Räder sind an einer gedachten oder physikalisch vorhandenen Doppelradachse angeordnet. Die Doppelradachse besitzt den Abstand LA/2 zum freien Ende der Deichsel und zum Kupplungsmaul, so dass sie mittig an dem Fahrzeug angeordnet ist. Auf eine Erfassung und Übertragung des Verdrehwinkels zwischen ziehendem und gezogenem Fahrzeug kann bei dieser Ausgestaltung verzichtet werden.

In einer weiteren, ebenfalls bevorzugten Ausgestaltung ist mindestens einer der Anhänger als Drei-Achshänger ausgebildet. Der Anhänger besitzt mittig und zentral ein ungelenktes Rad unter dem Anhänger. Alternativ können mittig auch zwei oder mehr Räder vorgesehen sein, die auf einer mittleren Radachse angeordnet sind. Sind zwei Räder an der mittleren Achse vorgesehen, so sind diese seitlich angeordnet.

Vier Schwenkrollen sind, verteilt um das ungelenkte Rad, bevorzugt in den Ecken des Anhängers angeordnet. Das ungelenkte Rad kann dabei als gefedertes Rad ausgebildet sein. Hier ist es denkbar, dass das Rad der mittleren Radachse weiter vorsteht, so dass der Anhänger sich zusätzlich auf den vorderen oder den hinteren Rädern abstützt. Auch bei dieser Anordnung ist die Drehachse des ungelenkten mittigen Rades der halbe Abstand LA zu dem freien Ende der Deichsel und dem Kupplungsmaul an dem Anhänger. Bevorzugt ist der Anhänger als ein E-förmiger Anhänger ausgebildet, in dem ein zu transportierender Wagen eingeschoben und, falls gewünscht, angehoben wird.

Die Erfindung wird anhand der nachfolgenden Figuren näher erläutert. Es zeigen:
- Fig. 1: eine Seitenansicht eines erfindungsgemäßen Transportzuges,
- Fig. 2: eine Draufsicht auf den Transportzug gemäß Fig. 1,
- Fig. 3: den Transportzug gemäß Fig. 1 bei einer Kurvenfahrt in der Draufsicht,
- Fig. 4: eine Schnittdarstellung einer Kupplungsgabel mit gekuppelter Deichsel,
- Fig. 5: eine Draufsicht auf den Kuppelpunkt gemäß Fig. 4,
- Fig. 6: eine Draufsicht auf einen Transportzug mit vierrädrigen portalartigen Anhängern,
- Fig. 7: eine Draufsicht auf einachsige Anhänger mit U-förmigen Rahmen,
- Fig. 8: eine Ausgestaltung als Plattform-Gliederzug,
- Fig. 9: eine Draufsicht auf den Transportzug gemäß Fig. 8,
- Fig. 10: eine Draufsicht auf einen Transportzug mit einem einachsigen Anhänger und
- Fig. 11: eine Draufsicht auf einen Transportzug mit einem zentralen, ungelenkten Rad.

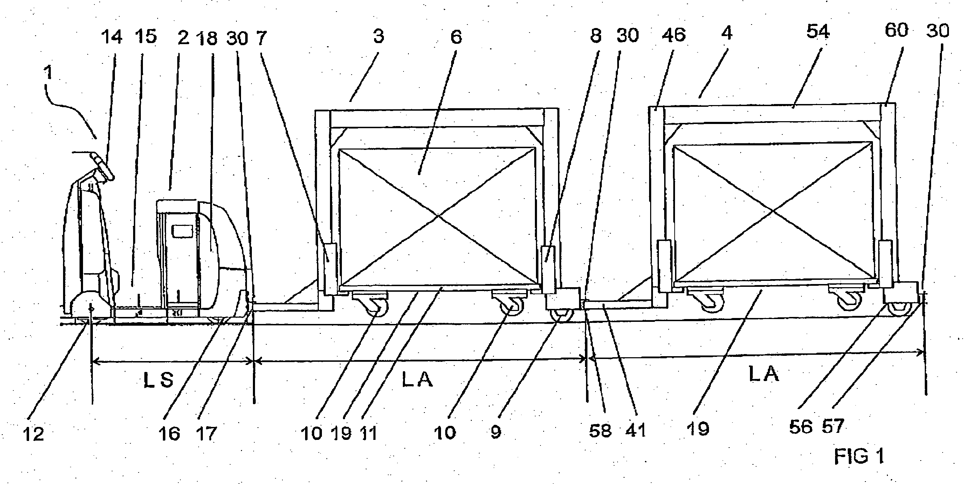

Fig. 1 zeigt eine Seitenansicht eines erfindungsgemäßen Transportzuges 1 mit einem Schlepper 2 und zwei Anhängern 3, 4 in einer Portal-Rahmen-Ausführung. Der beispielsweise elektrisch angetriebene Schlepper besteht im Wesentlichen aus einem Chassis 18, das für einen Fahrerplatz 15 mit Lenkrad Raum bietet. Für den Fahrantrieb ist ein, bezogen auf die Fahrtrichtung, hinten angeordnetes, gelenktes Antriebsrad 16 und eine ungelenkte Vorderachse 12 vorgesehen. Wenn im Rahmen der vorliegenden Anmeldung von einer Vorder- oder Hinterachse oder einer sonstigen Achse an einem Anhänger oder einem Fahrzeug gesprochen wird, so impliziert dies nicht eine mechanische, durchgehende Achse. Vielmehr wird bei der vorliegenden Anmeldung auch eine Einzelradaufhängung von zwei auf einer gedachten Achse angeordneten Räder als Achse bezeichnet. Ebenso verhält es sich, wenn auf eine gelenkte Achse abgestellt wird. Auch hierbei ist stets der Fall mit einschlossen sein, dass die Räder nicht durch eine die Radnabe miteinander verbindende Achse gelenkt werden, sondern es ist auch der Fall mit eingeschlossen, dass die Räder einzeln gelenkt werden.

Die portalförmigen Anhänger 3 und 4 bestehen im Wesentlichen aus einer starren Deichsel 41, die fest mit einem vorderen Vertikalrohr 46 verbunden ist. Das Portal der Anhänger wird von dem vorderen Vertikalrohr 46 und einem hinteren Vertikalrohr 60 gebildet, die über ein in Längsrichtung des Anhängers laufendes Rohr 54 miteinander verbunden sind. Das vordere und das hintere Vertikalrohr 46, 60 ist auf einem quer zur Fahrtrichtung orientierten Achskörper 56 und einem vorderen Achskörper 65 angeordnet. Die Deichsel 41 ist entweder direkt mit dem vorderen Vertikalrohr 46 oder dem vorderen Achskörper 65 starr verbunden.

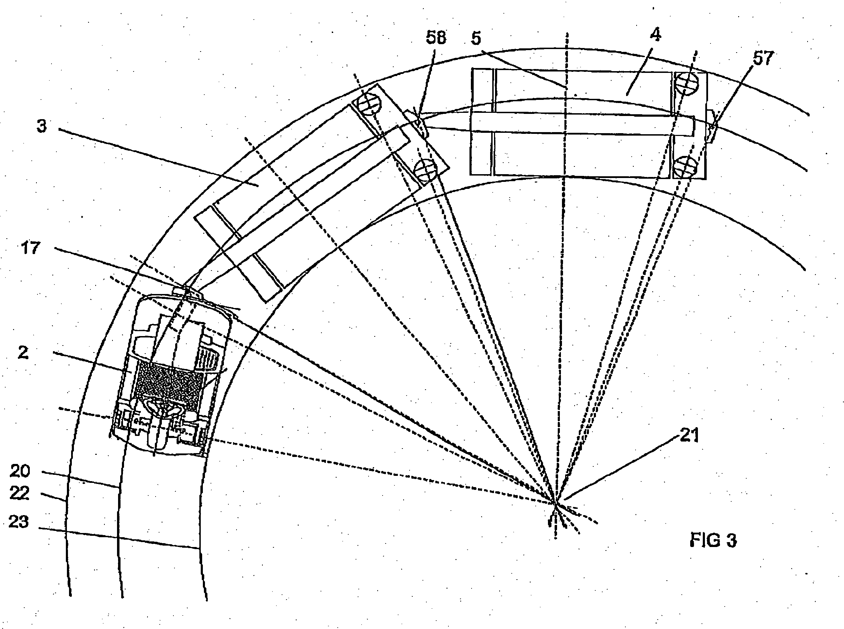

Der hintere Achskörper 56 mit seinen beiden Rädern 9 verfügt beispielsweise über eine Achsschenkel-Lenkung nach dem Prinzip von Ackermann. Allgemein können die gelenkten Hinterachsen als Drehschemellenkung, Achsschemellenkung, Einzelrad-Drehschemellenkung, gelenkte Bockrollen oder eine sonstige Lenkung ausgeführt sein. In Fig. 3 dargestellt sind gelenkte Bockrollen, bei denen das kurveninnere Rad wegen des geringeren Kurvenradius stärker als das kurvenäußere Rad eingeschlagen ist. Der hintere Achskörper 56 trägt an seiner Rückseite ein Kupplungsmaul 30, das einen Kupplungspunkt 57 bildet und die zur Verbindung mit einem geschleppten Anhänger vorgesehen ist.

Die Betätigung der Lenkung an dem hinteren Achskörper 56 erfolgt über ein mehrteiliges Tenkgestell, das mit einem vorderen Kuppelpunkt 17 oder 58 schwenkbar gelagert ist. Durch eine mechanische Kupplung über ein mehrteiliges Lenkgestell wird eine Lenkbewegung des schleppenden Fahrzeugs gegenüber dem geschleppten Fahrzeug auf die Hinterradlenkung weitergeleitet. Längen und Anordnungen der einzelnen Hebel des Lenkgestänges sind dabei so gewählt, dass sich der Momentanpol der gelenkten Räder immer nah auf der quer zur Fahrtrichtung des Anhängers verlaufenden Mittellinie zwischen seinen Kuppelpunkten ergibt

Der Abstand der Kuppclpunkte 57, 58 des Anhängers 4 entspricht für eine optimale Spurtreue des Transportzuges mit dem doppelten Abstand LS.

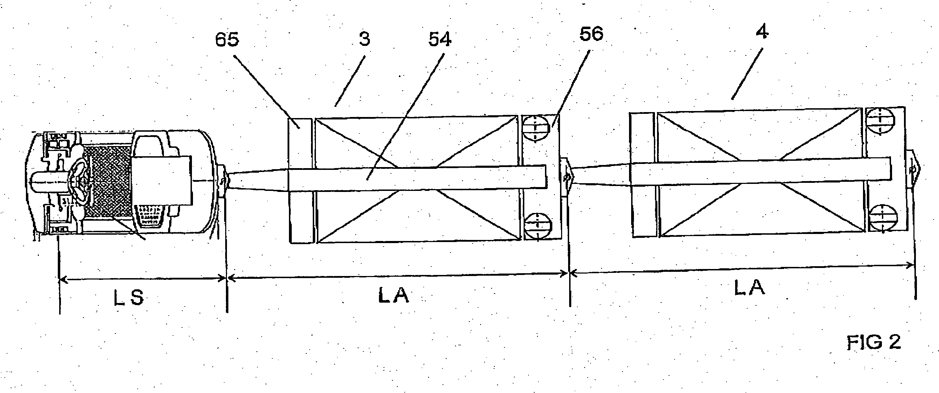

Fig. 3 zeigt den Transportzug aus den Fign. 1 und 2 in einer Draufsicht während einer Kurvenfahrt. Die Kuppelpunkte 17, 58 und 57 des Schleppfahrzeugs 2 bzw. der Anhänger 3 und 4 bewegen sich bei der Kurvenfahrt auf einem Kreissegment 20, dessen Mittelpunkt mit 21 bezeichnet ist. Der Mittelpunkt 21 ist zugleich der Momentanpol für alle Fahrzeuge des Gliederzuges, also insbesondere für die Räder des Schleppfahrzeugs 2 und die Räder der Anhänger. Indem die Kuppelpunkte 16, 58 und 57 auf dem Kreissegment 20 liegen, dessen Mittelpunkt mit dem Momentanpolcn bei der Lenkung zusammenfällt, werden Hüllkurven 22 und 23 definiert, die dicht beieinander liegen und so einen geringen Platzbedarf des Transportzuges während der Kurvenfahrt bedingen.

Die Aufnahme der Rollpalette 19 bei den portalartigen, einachsigen Anhängern 3 und 4 gemäß Fign. 1 und 2 erfolgt über L-förmige Lasttragelemente 7 und 8, die höhenverstellbar an dem vorderen und hinteren Vertikalrohr angeordnet sind. Die Lasttragelemente 7 und 8 greifen die Rollpalette an ihrem Rand, so dass im angehobenen Zustand die Schwenkrollen 10 und die Rollpaletten 19 bodenfrei sind. Der Hubantrieb der Lasttragelementc 7 und 8 ist bevorzugt derart ausgeführt, dass beide Lasttragelemente lastunabhängig synchron gehoben und gesenkt werden. Zur Sicherung der Rollpalette auf den Lasttragelementen 7, 8 können die Rollpaletten und die Lasttragelemente mit einer Zentriercinrichtung ausgestattet sein, die die Rollpalette während des Hubvorganges automatisch in Querrichtung auf die Lasttragclcmcntc zentrieren und im angehobenen Zustand fixieren.

Der portalförmige Aufbau des Anhängerrahmens besitzt den Vorteil, dass die Rollpaletten 19 mit der Last an beiden Seiten übergeben werden können und dass die Breite des Anhängers nicht größer sein muss als die Breite der Rollpalette. Zur Reduzierung des Hüllflächenbedarfs bei der Kurvenfahrt können die vorderen und hinteren Achskörper 56 und 65 auch schmaler als die Rollpalette ausgebildet sein. Hierdurch wird der in Fig. 3 dargestellte Hüllflächenbedarf noch weiter reduziert, da dann die kurvenäußeren Ecken der Last 6 bzw. der Tragpalette 11 der Rollpalette 19 den Radius des äußeren Hüllkreises vorgeben.

Bei der schematischen Darstellung in Fig. 2 sind die Lasttragelemente 7 und 8 zur besseren Übersicht nicht dargestellt.

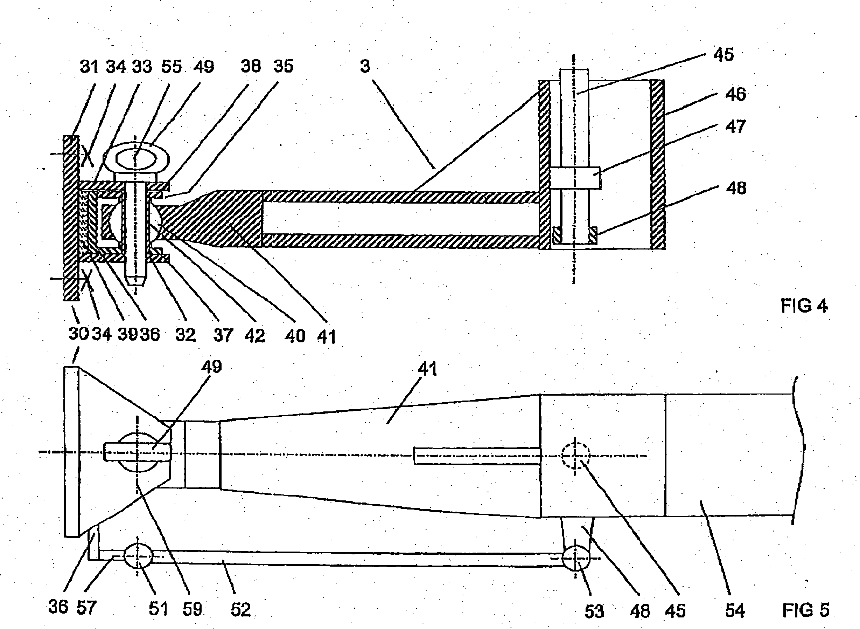

Fig. 4 zeigt eine Schnittdarstellung der Kupplung in einer bevorzugten Ausgestaltung. Das an dem vorausfahrenden Schleppfahrzeug oder Anhänger vorgesehene Kupplungsmaul 30 besitzt einen Kupplungsbolzen 49. Das Kupplungsmaul 30 ist jeweils am hinteren Ende des ziehenden Fahrzeugs beispielsweise durch Schrauben 34 befestigt und besitzt eine Grundplatte 31 sowie eine obere Platte 33 und eine dazu parallele untere Platte 32. Die obere und untere Platte besitzen jeweils eine miteinander fluchtende Bohrung zur Aufnahme des Kupplungsbolzens 49.

Der Anhänger ist an seinem vorderen Teil ausschnittsweise dargestellt und besitzt eine sich zum freien Ende hin verjüngende Deichsel 41 mit einer kugelförmigen Hülse 40. Die Hülse 40 ist in zwei Achsen drehbar gelagert. Das hintere Ende der Deichsel 41 ist fest mit dem Vertikalrohr 46 des Anhängers verbunden. Tn der kugelförmigen Hülse 40 ist formschlüssig und um eine Achse drehbar eine Hülse 42 gelagert, die die kugelförmige Hülse 40 und damit die Deichsel 41 formschlüssig mit einem Kupplungselement 35 verbindet. Das Kupplungselement 35 ist im abgekuppelten Zustand Teil des Anhängers und seiner Deichsel, im angekuppelten Zustand aber über den Kupplungsbolzen 49 starr mit der Kupplungsgabel des ziehenden Fahrzeugs verbunden.

Bei einer Lenkbewegung bewegen sich das Kupplungsmaul 30 und das Kupplungselement 35 der Deichsel gemeinsam um eine Hochsachse 55 relativ zur Deichsel 41.

Beim Ankuppeln des Anhängers wird die Deichsel 41 gelenkig mit dem Kupplungselement 35 in das Kupplungsmaul 30 eingeführt und mit Hilfe des Kupplungsbolzens 49 verriegelt. Hierbei kommt ein elastisches Element 39 in dem Kupplungsmaul 30 zur Anlage, so dass eine Bewegung des Kupplungsmauls 30 nahezu spielfrei auf das Kupplungselement 35 und damit auf eine seitliche vorstehende Lenkplatte 36 übertragen werden kann.

Bei dem erfindungsgemäßen Transportzug wird die relative Verdrehung des Kupplungsmauls 30 und damit des schleppenden Fahrzeugs, gegenüber dem Anhänger auf die gelenkten Räder des Anhängers übertragen. Hierzu dient das Kupplungselement 35, das in gekoppeltem Zustand über den Kupplungsbolzen 49 mit dem Kupplungsmaul 30 verbunden ist.

Fig. 5 zeigt eine Draufsicht auf die dargestellte Kupplung gemäß Fig. 4. Die Lenkplatte 36 des Kupplungselements 35 steht seitlich aus dem Bereich des Kupplungsmauls zwischen der oberen und der unteren Platte heraus. Die Lenkplatte 36 ist über den Abschnitt 57 fest mit einem ersten Kugelkopflager 51 verbunden, das in der gleichen horizontalen Ebene wie die kugelförmige Hülse 40 angeordnet ist. In dieser Ebene befindet sich auch das zweite Kugelkopflager 53, das über die Koppelstange 52 fest, bevorzugt in seiner Länge einstellbar, mit dem ersten Kugelkopflager 51 verbunden ist. Hierdurch ist die Koppelstange 52 in zwei Ebenen drehbar, einerseits mit der Lenkplatte 36 und andererseits mit einem Hebel 48. Der Hebel 48 ist fest mit einer vorderen, vertikalen Übertragungswelle 45 verbunden. Die vertikale Übertragungswelle 45 ist drehbar und in axialer Richtung fest über einen ersten Lagerpunkt 47 an dem vorderen Vertikalrohr 46 gelagert.

Beim Überfahren von Bodenunebenheiten kann sich die Kupplungsgabel 30 um die horizontale Achse 59 relativ zur Deichsel 41 verdrehen. Über das aus den Kugelköpfen 51 und 53, der kugelförmigen Hülse 40 und dem Lagerpunkt 47 der vorderen, vertikalen Übertragungswelle gebildete Gelenkviereck wird die Verdrehung des schleppenden Fahrzeugs und seine Hochachsc 50 gegenüber dem Anhänger auf die vorderen Übertragungswelle 45 weitergeleitet.

Die weitere Übertragung des Schwenkwinkels erfolgt in an sich bekannter Weise unter der erforderlichen Umkehr des Drehsinns, beispielsweise über geeignete Hebel und eine hintere, vertikale Übertragungswelle, die im oder am hinteren Vertikalrohr 60 angeordnet ist. Die Übertragung erfolgt auf ein Lenkgestell der gelenkten Hinterräder des Anhängers. Die Übertragung des Verdrehwinkels auf die gelenkten Räder der Anhänger erfolgt bevorzugt für jeden Anhänger in gleicher Weise.

Die Übertragung des Verdrehwinkels des Kupplungselements 35 gegenüber der Deichsel 41 auf das Gestänge der Anhängerachse muss nicht über das dargestellte Gelenkviereck erfolgen, sondern kann auch hydraulisch, mit Ketten oder Seilen oder elektromechanisch über Sensoren und Aktoren erfolgen.

Der Einsatz eines Schleppfahrzeugs mit gelenkten Hinterrädern bei einer gelenkten Hinterachse bietet den Vorteil, dass sich der Kupplungspunkt bei jeder Lenkbewegung zum Kurvenäußeren bewegt und somit die Tendenz der nachlaufenden Anhänger, den Hüllkreis nach innen zu verschieben, um die Hüllfläche zu vergrößern, reduziert.

Ein Vorteil des einachsigen Anhängers ist, dass ein großer Teil der Masse des vorderen Anhängers und seiner Last auf dem Rad 16 des Schleppfahrzeugs liegt. Diese erhöhte, lastabhängige Radlast führt zu einem verbesserten Brems- und Spurfühnungsverhalten des Schleppfahrzeugs, insbesondere dann, wenn das hintere Rad des Schleppfahrzeugs das gebremste Rad ist.

In einer weiteren bevorzugten Ausgestaltung ist die Hubeinrichtung des Anhängers im hinteren Rahmenteil 56 angeordnet, so dass auch bei unbeladenem Anhänger auf den gelenkten Hinterrädern eine erhöhte Last liegt Dies erhöht die Spurführungskräfte bei der Kurvenfahrt, insbesondere bei unbeladenen Anhängern innerhalb des Transportzuges.

Zur besseren Handhabung der abgekoppelten einachsigen Anhänger können diese mit höheneinstellbaren oder klappbaren Stützrädern versehen sein. Beispielsweise kann ein einzelnes Stützrad an der Deichsel 41 vorgesehen sein, um für den abgekoppelten Anhänger bei abgesenktem Stützrad ein Dreiradfahrwerk zur Verfügung zu stellen.

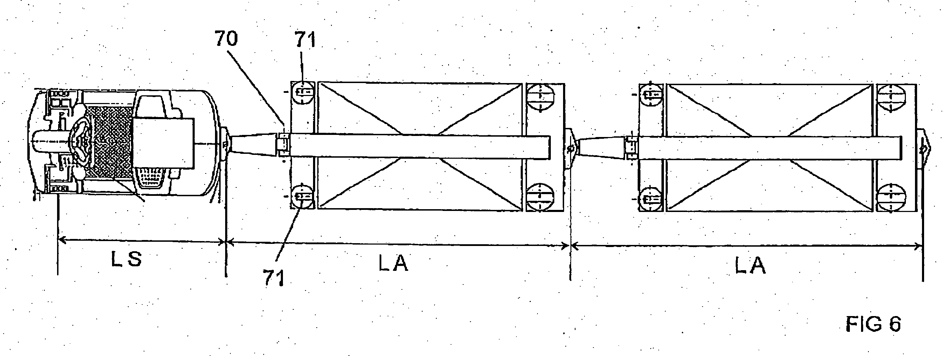

Fig. 6 zeigt eine alternative Ausgestaltung von portalartigen Anhängern, bei denen ein Vierradfahrwerk vorgesehen ist. Die am vorderen Rahmcntcil angeordneten Räder 71 sind hierbei als ungelenkte Schwenkrollen ausgeführt. Alternativ zu der in Fig. 6 dargestellten Ausgestaltung mit zwei seitlich angeordneten Schwenkrollen 7, kann auch zentral unter dem Vertikalrohr 46 ein einzelnes Rad vorgesehen sein. Um bei einem solchen Vierradfahrwerk den Höhenausgleich für die Deichsel 41 zu bewerkstelligen, ist diese mit einem Gelenk 70 um eine horizontale Achse quer zur Fahrtrichtung schwenkbar.

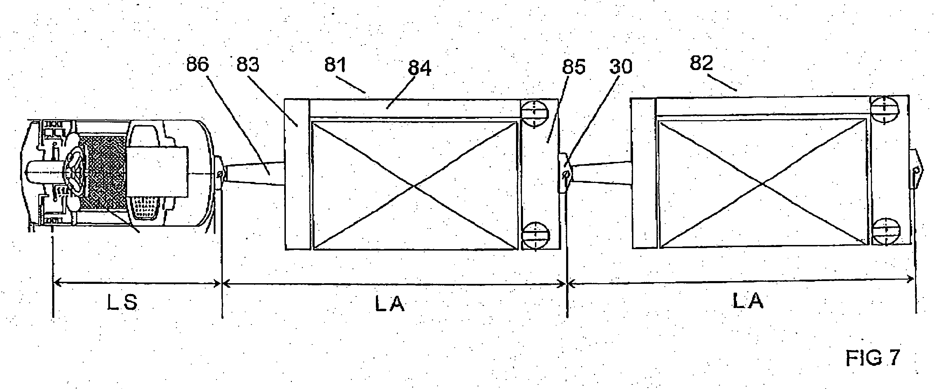

Fig. 7 zeigt eine weitere Ausführungsform des erfindungsgemäßen Transportzuges. Die Anhänger 81 und 82 besitzen im Gegensatz zu dem portalartigen Rahmen einen horizontal orientierten, in der Draufsicht U-förmigen Rahmen, der zwar zu einer größeren Anhängerbreite führt und nur eine einseitige Lastübergabe zulässt, jedoch keine Höhenbeschränkung für die Last darstellt. Der Rahmen der Anhänger besteht aus einer Deichsel 86, die an einem vorderen, quer verlaufenden Schenkel 83 angeordnet ist. Der vordere, quer verlaufende Schenkel 83 ist über ein längsorientiertes Rahmenteil 84 mit einem querorientierten Rahmenteil 85, an dem die hcckscitige Kupplungsgabel befestigt ist, verbunden. Die Übertragung des Drehwinkel zwischen dem schleppenden Fahrzeug oder dem schleppenden Anhänger und dem geschleppten Anhänger selbst erfolgt über entsprechende Gestänge, die beispielsweise in oder an den Rahmenteilen 83, 84, 85 verlaufen.

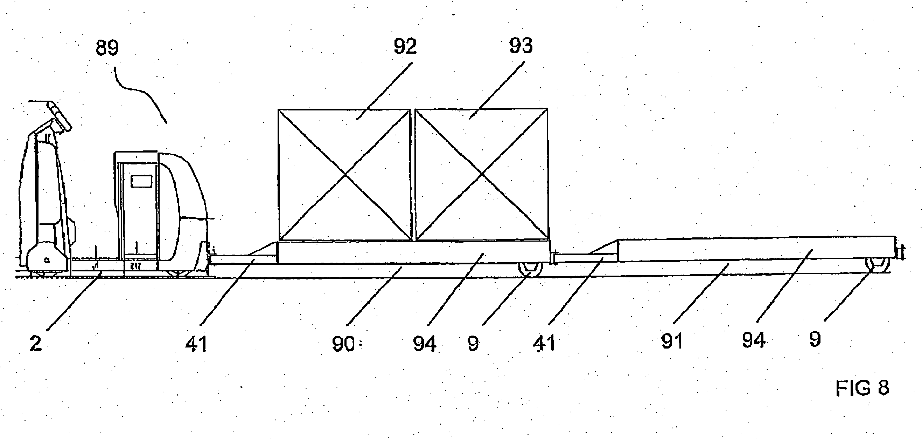

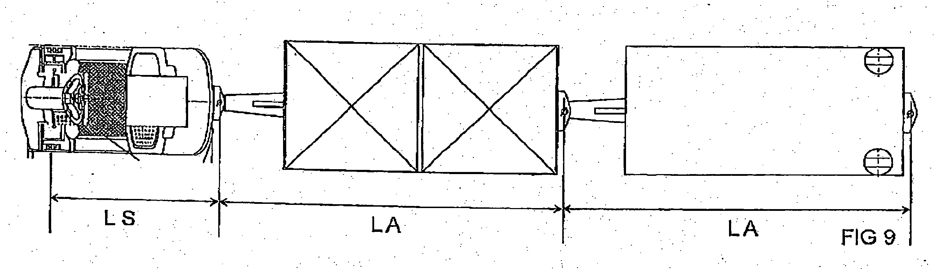

Fign. 8 und 9 zeigen eine weitere Ausgestaltung des Transportzuges, bei der die Anhänger 90, 91 als Plattformanhänger mit einem kastenförmigen Rahmen 94 ausgebildet sind. Der kastenförmige Rahmen ist mit der Deichsel 41 verbunden und besitzt gelenkte Räder 9 an seinem hinteren Ende. Die Übertragung der Schwenkbewegung zwischen dem schleppenden und dem geschleppten Fahrzeug kann über das bereits vorstehend beschriebene Gelenkviereck erfolgen. Die Be- und Entladung der dargestellten Rahmenplattform erfolgt beispielsweise durch einen Gabelstapler oder andere Hebezeuge. Anders als bei den vorstehenden Anhängern ist die Aufnahme von Lasten 92, 93 bzw. der Innenwagen nur möglich, wenn diese nicht mit Rollen versehen sind.

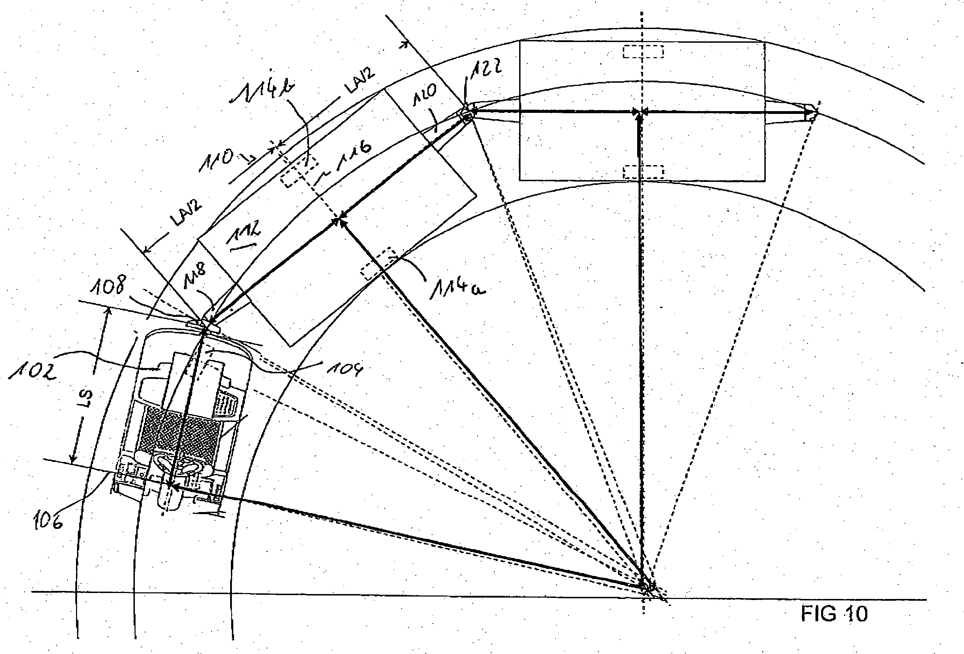

Fig. 10 zeigt ein dreirädriges Schleppfahrzeug 102 mit einem gelenkten Hinterrad 104 und einer Vorderachse 106. In Fahrtrichtung hin ist eine Anhängerkupplung 108 vorgesehen. Der Abstand zwischen der Anhängerkupplung 108 und der Vorderachse 106 beträgt LS. Der Anhänger 110 besitzt eine Tragplattform 112 und eine an dieser angeordnete Drehachse mit zwei Räder 114a, 114b. Die Räder können beispielsweise als Bockrollen an dem Anhänger 110 derart angeordnet sein, dass die Drehachsen der Bockrollen zusammenfallen und eine gemeinsame Drehachse 116 bilden. Alternativ ist es auch möglich, die Räder 114a, 114b auf einer gemeinsamen Achse anzuordnen. Der in dem Ausführungsbeispiel dargestellte Anhänger 110 besitzt nach vorne eine starre Deichsel 118, mit der der Anhänger an dem Schleppfahrzeug 102 und dessen Kupplung 108 gekoppelt ist. Ferner ist der Anhänger 110 mit einer langgestreckten Anhängerkupplung 120 ausgestattet. Alternativ ist es auch möglich, die Anhängerplattform 112 weiter in Richtung der Anhängerkupplung 120 bis zu deren freiem Ende 122 zu erstrecken. Der Abstand zwischen der Drehachse 116 der Räder 114a, 114b zu dem freien Ende 122 der Anhängerkupplung 120 beträgt LA/2, genauso wie der Abstand der Achse 116 zu dem freien Ende der Deichsel 118.

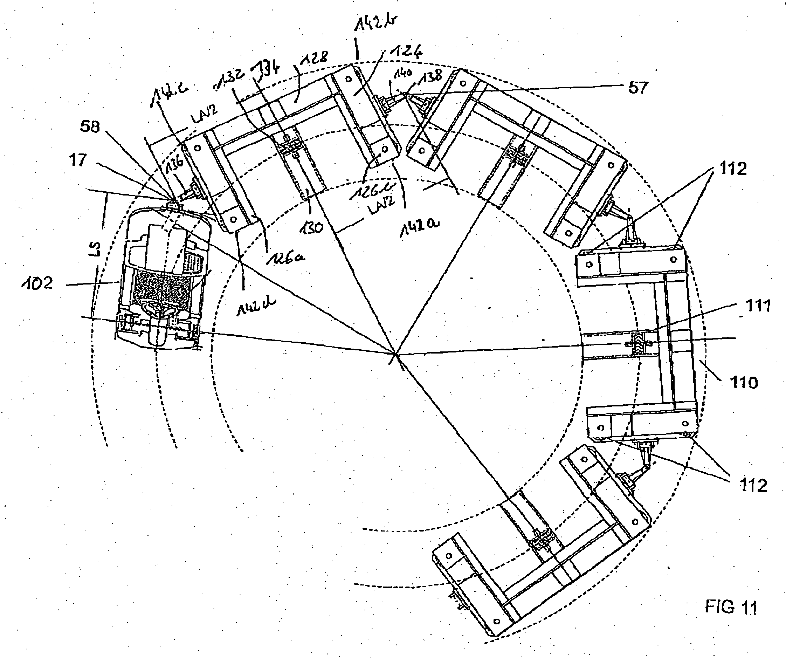

Fig. 11 zeigt eine alternative Ausgestaltung, bei der ein heckgelenktes Schleppfahrzeug 102 einen Zug mit E-förmigen Anhängern 124 schleppt. Der E-förmige Anhänger besitzt einen vorderen und einen hinteren Rahmenschenkel 126a, 126b, die über einen außermittigen Längsschenkel 128 miteinander verbunden sind. An dem Längsschenkel 128 ist ein mittlerer Querschenkel 130 angeordnet. Ein zu transportierender Wagen oder eine Last können in dem E-förmigen Anhängerrahmen 124 angeordnet werden, um dort dann in einem angehobenen Zustand transportiert zu werden.

Der mittlere Querschenkel 130 ist ungefähr mittig mit einem ungelenkten Rad 132 ausgestattet. Alternativ hierzu können auch zwei oder mehr als zwei Räder an dem Quersehenkel 130 angeordnet sein. Bei zwei Rädern sind diese bevorzugt seitlich an dem Querschenkel 130 angeordnet. Das ungelenkte Rad 132 kann beispielsweise gefedert an dem Mittelarm 130 angeordnet sein. Die Drehachse 134 des ungelenkten Rades 132 besitzt wieder einen Abstand von LA/2 zu dem freien Ende der Deichsel 136 ebenso wie zu dem freien Ende 138 der Anhängerkupplung 140.

In der Draufsicht verdeckt sind die in den vier Ecken 142a bis 142d angeordneten ungelenkten Räder. In jeder der Ecken ist ein Rad angeordnet, das als Lenkrad ausgebildet passiv mit dreht, wenn es Bodenkontakt hat.

## Patentansprüche

1. Transportzug (1) mit einem Schleppfahrzeug (2) und einem oder mehreren Anhängern (3, 4), wobei jeder der Anhänger (3, 4) einen Tragrahmen aufweist, der ausgebildet ist, um einen Innenwagen (19) oder eine Last in einem angehobenen Zustand aufzunehmen, und der, bezogen auf seine Fahrtrichtung, an einer Seite eine Deichsel (41) zur Verbindung mit dem Schleppfahrzeug (2) oder einem vorausfahrenden Anhänger aufweist und an seiner in Fahrtrichtung gegenüberliegenden Seite ein Kupplungsmaul (30) zur Verbindung mit einem angehängten Anhänger aufweist und wobei das Schleppfahrzeug (2), bezogen auf seine Fahrtrichtung, an einer Seite ein Kupplungsmaul (30) zur Verbindung mit der Deichsel eines geschleppten Anhängers (3, 4) und an der gegenüberliegenden Seite in Fahrtrichtung eine Vorderachse (12) aufweist,
**dadurch gekennzeichnet, dass**
ein Abstand (LS) zwischen Vorderachse (12) und Kupplungsmaul (30) des Schleppfahrzeugs (2) einem halben Abstand (LA) zwischen freiem Ende der Deichsel (41) und des Kupplungsmauls (30) jedes der Anhänger (3, 4) entspricht.

2. Transportzug nach Anspruch 1, **dadurch gekennzeichnet, dass** das Schleppfahrzeug (2) ein dreirädriges Fahrwerk mit einem gelenkten Hinterrad (16) aufweist.

3. Transportzug nach Anspruch 1, **dadurch gekennzeichnet, dass** das Schleppfahrzeug ein vierrädriges Fahrwerk mit gelenkten Hinterrädern aufweist.

4. Transportzug nach einem der Ansprüche 1 bis 3, **dadurch gekennzeichnet, dass** der Abstand (LS) zwischen Vorderachse (12) und Kupplungsmaul (30) des Schleppfahrzeugs (2) dem Abstand zwischen der Mittellinie der Vorderachse (12) und einem Kupplungspunkt (17) des Kupplungsmauls (30) entspricht.

5. Transportzug nach einem der Ansprüche 1 bis 4, **dadurch gekennzeichnet, dass** der Abstand (LA) zwischen dem freien Ende der Deichsel (41) und dem Kupplungsmaul (30) des Anhängers (3, 4) dem Abstand zwischen einem Kupplungspunkt (17) des freien Endes der Deichsel (41) und einem Kupplungspunkt (17) des Kupplungsmauls (30) entspricht.

6. Transportzug nach einem der Ansprüche 1 bis 5; **dadurch gekennzeichnet, dass** mindestens einer der Anhänger (3, 4) als zweirädriger Anhänger (110) ausgebildet ist, dessen Räder (114a, 114b), bezogen auf die Fahrtrichtung, außermittig an dem Tragrahmen angeordnet ist, wobei die Räder (114a, 114b) bevorzugt näher zur Kupplungsgabel als zur Deichsel angeordnet sind.

7. Transportzug nach Anspruch 6, **dadurch gekennzeichnet, dass** die Räder als lenkbare Räder (114a, 114b) ausgebildet sind, die entsprechend einem zwischen der Deichsel (118) und dem Kupplungsmaul (108) des Schleppfahrzeugs (102) oder des vorausfahrenden Anhängers auftretenden Verdrehwinkels ausgelenkt werden.

8. Transportzug nach Anspruch 7, **dadurch gekennzeichnet, dass** die lenkbaren Räder über eine Koppelstange mit der Deichsel des Anhängers gekoppelt sind.

9. Transportzug nach einem der Ansprüche 1 bis 5, **dadurch gekennzeichnet, dass** mindestens einer der Anhänger drei oder vier Räder (71) aufweist, von denen das oder die näher zur Deichsel (41) angeordneten Vorderräder als Schwenkrollen ausgebildet sind.

10. Transportzug nach Anspruch 9, **dadurch gekennzeichnet, dass** der mindestens eine Anhänger zwei gelenkte Hinderräder aufweist.

11. Transportzug nach einem der Ansprüche 1 bis 10, **dadurch gekennzeichnet, dass** mindestens einer der Anhänger (3, 4) einen portalartigen Tragrahmen (46, 60, 54) aufweist, der einen Innenwagen von beiden Längsseiten quer zur Fahrtrichtung aufnehmen kann.

12. Transportzug nach einem der Ansprüche 1 bis 10, **dadurch gekennzeichnet, dass** mindestens einer der Anhänger (81, 82) einen U-förmigen Tragrahmen (83, 84, 85) aufweist, der einen Innenwagen an seiner offenen Längsseite quer zur Fahrtrichtung aufnehmen kann.

13. Transportzug nach einem der Ansprüche 1 bis 12, **dadurch gekennzeichnet, dass** mindestens einer der Anhänger eine Breite quer zur Fahrtrichtung aufweist, die kleiner oder gleich einer Breite des aufzunehmenden Innenwagens oder der aufzunehmenden Last ist.

14. Transportzug nach einem der Ansprüche 1 bis 5, **dadurch gekennzeichnet, dass** mindestens einer der Anhänger (110) mittig ein Paar von ungelenkten Rädern (114a, 114b) aufweist.

15. Transportzug nach einem der Ansprüche 1 bis 5, **dadurch gekennzeichnet, dass** der Anhänger (124) als Drei-Achsanhänger ausgebildet ist, wobei ein oder zwei ungelenkte Räder mittig und jeweils zwei Schwenkrollen vor und hinter dem mittigen Rad, bezogen auf die Anhängerlängsrichtung, angeordnet sind.

## Claims

1. A transport train (1) with a tow vehicle (2) and one or more trailers (3, 4), wherein each of the trailers (3, 4) has a supporting frame which is configured to receive an inner car (19) or a load in a lifted state and which has a drawbar (41) for connection to the tow vehicle (2) or a preceding trailer on one side with respect to its direction of travel and has a coupling jaw (30) for connection to an attached trailer on its opposite side in the direction of travel, and wherein the tow vehicle (2) has a coupling jaw (30) for connection to the drawbar of a towed trailer (3, 4) on one side with respect to its direction of travel, and has a front axle (12) on the opposite side in the direction of travel,
**characterized in that**
a distance (LS) between the front axle (12) and the coupling jaw (30) of the tow vehicle (2) corresponds to half the distance (LA) between the free end of the drawbar (41) and the coupling jaw (30) of each of the trailers (3, 4).

2. The transport train according to Claim 1, **characterized in that** the tow vehicle (2) has a three-wheeled chassis with a steered rear wheel (16).

3. The transport train according to Claim 1, **characterized in that** the tow vehicle has a four-wheeled chassis with steered rear wheels.

4. The transport train according to any one of Claims 1 to 3, **characterized in that** the distance (LS) between the front axle (12) and the coupling jaw (30) of the tow vehicle (2) corresponds to the distance between the center line of the front axle (12) and a coupling point (17) of the coupling jaw (30).

5. The transport train according to any one of Claims 1 to 4, **characterized in that** the distance (LA) between the free end of the drawbar (41) and the coupling jaw (30) of the trailer (3, 4) corresponds to the distance between a coupling point (17) of the free end of the drawbar (41) and a coupling point (17) of the coupling jaw (30).

6. The transport train according to any one of Claims 1 to 5, **characterized in that** at least one of the trailers (3, 4) is configured as a two-wheeled trailer (110), the wheels of which (114a, 114b) are located eccentrically on the supporting frame with respect to the direction of travel, wherein the wheels (114a, 114b) are preferably located closer to the coupling fork than to the drawbar.

7. The transport train according to Claim 6, **characterized in that** the wheels are configured as steerable wheels (114a, 114b) which are deflected according to a twist angle which occurs between the drawbar (118) and the coupling jaw (108) of the tow vehicle (102) or the preceding trailer.

8. The transport train according to Claim 7, **characterized in that** the steerable wheels are coupled to the drawbar of the trailer via a coupling rod.

9. The transport train according to any one of Claims 1 to 5, **characterized in that** at least one of the trailers has three or four wheels (71), of which the one or more front wheels located closer to the drawbar (41) are configured as swivel castors.

10. The transport train according to Claim 9, **characterized in that** the at least one trailer has two steered rear wheels.

11. The transport train according to any one of Claims 1 to 10, **characterized in that** at least one of the trailers (3, 4) has a gantry-like supporting frame (46, 60, 54) which can receive an inner car from both longitudinal sides transversely to the direction of travel.

12. The transport train according to any one of Claims 1 to 10, **characterized in that** at least one of the trailers (81, 82) has a U-shaped supporting frame (83, 84, 85) which can receive an inner car on its open longitudinal side transversely to the direction of travel.

13. The transport train according to any one of Claims 1 to 12, **characterized in that** at least one of the trailers has a width transversely to the direction of travel which is less than or equal to a width of the inner car to be received or the load to be received.

14. The transport train according to any one of Claims 1 to 5, **characterized in that** at least one of the trailers (110) has a pair of non-steered wheels (114a, 114b) centrally.

15. The transport train according to any one of Claims 1 to 5, **characterized in that** the trailer (124) is configured as a three-axle trailer, wherein one or two non-steered wheels are located centrally and two swivel castors respectively are located before and after the central wheel, with respect to the longitudinal direction of the trailer.

## Revendications

1. Train de transport (1) comprenant un véhicule de remorquage (2) et une ou plusieurs remorques (3,4), chacune des remorques (3, 4) présentant un cadre de support qui est constitué pour loger un chariot intérieur (19) ou une charge dans un état relevé et qui, par rapport à son sens de la marche, présente, sur un côté, un timon (41) pour le raccordement au véhicule de remorquage (2) ou à une remorque roulant devant et, sur son côté opposé au sens de la marche, une mâchoire d'attelage (30) destinée au raccordement à une remorque attelée, et le véhicule de remorquage (2) présentant, par rapport à son sens de la marche, sur un côté, une mâchoire d'attelage (30) destinée au raccordement à un timon d'une remorque (3, 4) remorquée et, sur le côté opposé dans le sens de la marche, un essieu avant (12),
**caractérisé en ce**
**qu'**un espace (LS) entre l'essieu avant (12) et la mâchoire d'attelage (30) du véhicule de remorquage (2) correspond à une demi distance (LA) entre l'extrémité libre du timon (41) et de la mâchoire d'attelage (30) de chacune des remorques (3, 4).

2. Train de transport selon la revendication 1, **caractérisé en ce que** le véhicule de remorquage (2) présente un châssis à trois roues avec une roue arrière (16) dirigée.

3. Train de transport selon la revendication 1, **caractérisé en ce que** le véhicule de remorquage présente un châssis à quatre roues avec des roues arrière dirigées.

4. Train de transport selon l'une des revendications 1 à 3, **caractérisé en ce que** l'espace (LS) entre l'essieu avant (12) et la mâchoire d'attelage (30) du véhicule de remorquage (2) correspond à la distance entre la ligne médiane de l'essieu avant (12) et un point d'attelage (17) de la mâchoire d'attelage (30).

5. Train de transport selon l'une des revendications 1 à 4, **caractérisé en ce que** la distance (LA) entre l'extrémité libre du timon (41) et la mâchoire d'attelage (30) de la remorque (3, 4) correspond à la distance entre un point d'attelage (17) de l'extrémité libre du timon (41) et un point d'attelage (17) de la mâchoire d'attelage (30).

6. Train de transport selon l'une des revendications 1 à 5, **caractérisé en ce qu'**au moins une des remorques (3, 4) est constituée en tant que remorque à deux roues (110) dont les roues (114a, 114b), par rapport au sens de la marche, sont disposées de façon décentrée sur le cadre de support, les roues (114a, 114b) étant de préférence disposées plus près de la fourche d'attelage que du timon.

7. Train de transport selon la revendication 6, **caractérisé en ce que** les roues sont constituées en tant que roues (114a, 114b) dirigeables qui sont déviées selon un angle de torsion apparaissant entre le timon (118) et la mâchoire d'attelage (108) du véhicule de remorquage (102) ou de la remorque roulant devant.

8. Train de transport selon la revendication 7, **caractérisé en ce que** les roues dirigeables sont accouplées par le biais d'une tige d'accouplement avec le timon de la remorque.

9. Train de transport selon l'une des revendications 1 à 5, **caractérisé en ce qu'**au moins une des remorques présente trois ou quatre roues (71) dont la ou les roues avant disposées le plus près du timon (41) sont constituées en tant que roulettes pivotantes.

10. Train de transport selon la revendication 9, **caractérisé en ce que** la remorque au moins au nombre de un présente deux roues arrière dirigées.

11. Train de transport selon l'une des revendications 1 à 10, **caractérisé en ce qu'**au moins une des remorques (3, 4) présente un cadre de support (46, 60, 54) du type portique qui peut loger un chariot intérieur de deux côtés longitudinaux transversalement au sens de la marche.

12. Train de transport selon l'une des revendications 1 à 10, **caractérisé en ce qu'**au moins une des remorques (81, 82) présente un cadre de support (83, 84, 85) en forme de U qui peut loger un chariot intérieur sur son côté longitudinal ouvert transversalement au sens de la marche.

13. Train de transport selon l'une des revendications 1 à 12, **caractérisé en ce qu'**au moins une des remorques présente, transversalement au sens de la marche, une largeur qui est inférieure ou égale à une largeur du chariot intérieur à loger ou de la charge à loger.

14. Train de transport selon l'une des revendications 1 à 5, **caractérisé en ce qu'**au moins une des remorques (110) présente, de façon centrée, une paire de roues (114a, 114b) non dirigées.

15. Train de transport selon l'une des revendications 1 à 5, **caractérisé en ce que** la remorque (124) est constituée en tant que remorque à trois essieux, une ou deux roues non dirigées étant disposées de façon centrée, et respectivement deux roulettes pivotantes étant disposées devant et derrière la roue centrale, par rapport à la direction longitudinale de remorque.
